# DEMANDE DE BREVET EUROPEEN

(11) **EP 4 847 362 A1**
(43) Date de publication de la demande: **02.12.2026**
(21) Numéro de dépôt: 26182018.7
(22) Date de dépôt: 29.05.2026
(51) Int. Cl.: B62M 11/06, B62M 25/08, F16D 41/30, F16H 3/083, B62M 6/55, F16D 11/12, F16H 63/30

(54) **DISPOSITIF DE CHANGEMENT DE VITESSE ET ENGIN DE MOBILITÉ ASSOCIÉ**

(30) Priorité: 31.05.2025 FR 2505863
(71) Demandeur: VALEO EMBRAYAGES, 80009 Amiens (FR)
(72) Inventeur: SPAGNOLO, Matteo, 95892 CERGY PONTOISE (FR); CIMA, Massimo, 95892 CERGY PONTOISE (FR); CANTELLA, Andrea, 95892 CERGY PONTOISE (FR); LOMUSCIO, Gianmarco, 95892 CERGY PONTOISE (FR)
(74) Mandataire: Valeo Powertrain Systems

(57) **Abrégé**

L'invention concerne un Dispositif de changement de vitesse pour engin de mobilité (1) comportant :
- un arbre de sélection dans lequel sont disposées une navette et une vis sans fin,
- un actionneur de changement de vitesse agencé pour déplacer la navette le long de la vis sans fin entre trois positions, et engager un rapport sélectionné via au moins une série de trois cliquets (42) disposés les uns à la suite des autres selon l'axe longitudinal de l'arbre de sélection,
caractérisé en ce que le cliquet a un corps (421) de forme allongée et comporte a une extrémité une protubérance (422) qui s'insère dans un évidement de l'arbre de sélection.

## Description

La présente invention concerne le domaine des dispositifs de changement de vitesses, et plus particulièrement un dispositif de changement de vitesse pour un engin de mobilité utilisant au moins une propulsion électrique, et par exemple un vélo à assistance électrique.

Lors du fonctionnement d'un engin de mobilité, une force motrice est transmise aux roues par l'intermédiaire d'un système de manivelle tournant autour d'un axe de pédalier qui entraîne la roue arrière généralement par une chaîne.

Il est déjà connu dans l'art antérieur des dispositifs de changement de vitesses pour engin de mobilité. Ces dispositifs de changement de vitesses comportent une boîte de vitesses dans laquelle une navette est configurée pour, lors de son déplacement, se positionner sous un pignon d'un rapport sélectionné, et enclencher ce rapport via un cliquet pour changer de vitesse.

Un inconvénient de ce dispositif provient du fait que la forme actuelle du cliquet ne permet pas un désengagement optimisé lors du passage des rapports, et particulièrement lors de la rétrogradation d'un rapport à un autre. La rétrogradation se fait donc difficilement avec pour conséquence une usure prématurée des cliquets et autres pièces du dispositif, et donc un risque de casse des éléments.

La présente invention a donc pour objet de pallier un ou plusieurs des inconvénients des dispositifs de l'art antérieur en proposant un ensemble de transmission, pour engin de mobilité amélioré.

Pour cela la présente invention propose un dispositif de changement de vitesse pour engin de mobilité comportant :
- un arbre de sélection dans lequel sont disposées une navette et une vis sans fin, trois pignons d'entrée agencés pour tourner librement autour de l'arbre de sélection et trois pignons de sortie,
- un actionneur de changement de vitesse agencé pour déplacer la navette le long de la vis sans fin entre trois positions, et engager un rapport sélectionné via au moins une série de trois cliquets disposés les uns à la suite des autres selon l'axe longitudinal de l'arbre de sélection, chaque cliquet étant associé à un dispositif de soulèvement permettant de soulever le cliquet via la navette, et à enclencher le rapport sélectionner via les pignons d'entrée et de sortie, le cliquet ayant un corps de forme allongée et comporte a une extrémité une protubérance qui s'insère dans un évidement de l'arbre de sélection.

Cette protubérance permet d'améliorer le passage des rapports du dispositif, et en particulier lors de la rétrogradation.

Selon un mode de réalisation, la protubérance forme un angle droit avec le corps du cliquet et est orientée vers l'arbre de sélection de façon à s'insérer dans l'évidement.

Cette forme permet de consolider le dispositif, de le rendre plus robuste lors du changement de vitesse.

Selon un mode de réalisation, le corps du cliquet est disposé tangentiellement par rapport à l'arbre de sélection de façon à ce que la protubérance soit insérée dans l'évidement.

Selon un mode de réalisation, le dispositif comporte deux séries de trois cliquets disposés les uns à la suite des autres selon un axe longitudinal de l'arbre de sélection disposées à 180 degrés l'une de l'autre autour de l'arbre de sélection.

Cela limite le nombre de pièces par rapport à l'art antérieur qui comporte trois séries de cliquets.

Selon un mode de réalisation, le dispositif comporte au moins un système de blocage radial formé par au moins une rainure formé dans l'arbre de sélection et une bague élastique disposée dans la rainure et de façon à maintenir le cliquet plaqué dans son évidement, tout en lui permettant de se soulever via la navette.

Ainsi, deux cliquets de deux séries différentes sont maintenus en place par le même moyen de blocage, ce qui limite le nombre de pièce tout en permettant les fonctions de blocage, placage dans l'évidement et soulèvement via la navette.

Selon un mode de réalisation, la bague élastique entoure radialement l'arbre de sélection. Selon un mode de réalisation, la navette comporte deux encoches permettant de maintenir le cliquet en place, selon un axe longitudinal de la navette, via sa protubérance.

Ces encoches permettent ainsi le maintien avec un jeu limité mais nécessaire pour maintenir la souplesse lors du changement de passage de rapport de vitesse.

Selon un mode de réalisation, les deux encoches sont disposées de part et d'autre d'un canal transversal de la navette.

La présente invention concerne également un engin de mobilité, notamment un engin de mobilité à assistance électrique, comportant un dispositif de changement de vitesse selon l'invention.

Selon un mode de réalisation, l'engin est un vélo à assistance électrique.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue d'un engin de mobilité selon un des aspects de l'invention,
- la [Fig. 2] illustre l'ensemble de transmission de l'engin de mobilité de la Figure 1,
- la [Fig. 3] illustre une vue en coupe d'une partie de l'ensemble de transmission selon un mode de réalisation de l'invention,
- la [Fig. 4] illustre une vue en coupe d'une autre partie de l'ensemble de transmission selon un mode de réalisation de l'invention,
- la [Fig. 5] est une vue en coupe d'un système de cliquets selon l'invention,
- la [Fig. 6] est une vue en élévation d'un cliquet selon l'invention,
- la [Fig. 7] est une vue d'une série de cliquets avec un système de blocage radial selon l'invention,
- la [Fig. 8] est une vue en élévation de la navette selon l'invention.

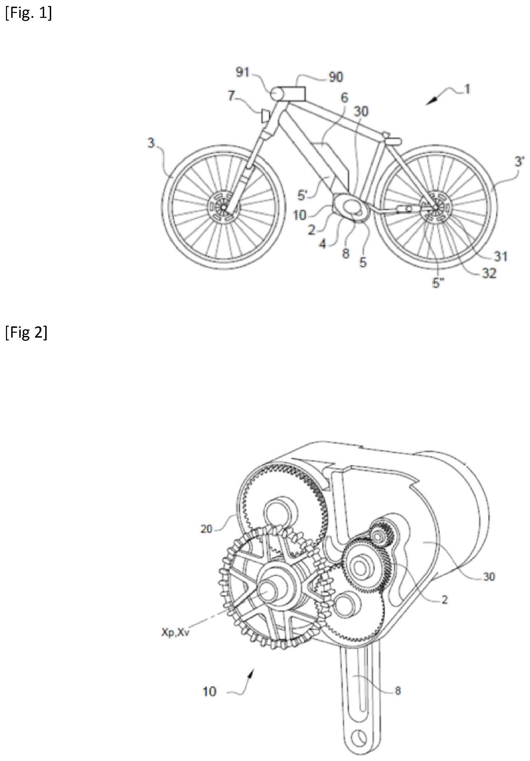

La [Fig. 1] illustre un engin de mobilité 1 selon un des aspects de l'invention. L'engin 1 est ici un vélo à assistance électrique comportant un moteur électrique 2. Le moteur électrique 2 est agencé pour assurer une partie de la propulsion de l'engin.

Le vélo comporte au moins deux roues 3, 3 ' auxquelles est fournie une force motrice, par l'intermédiaire de deux pédales tournant autour d'un axe de pédalier d'axe Xp [Fig. 2] qui entraîne la roue arrière par exemple par une chaîne, ou tout autre moyen de transmission lors de son utilisation.

L'engin 1 comporte également une unité de pilotage 4 ainsi que plusieurs capteurs 5, 5', 5", situés par exemple au niveau du pédalier, sur le cadre du vélo ou au niveau d'une roue 3, 3'. L'engin 1 ici représenté comporte également un dispositif de stockage d'énergie sous forme d'une batterie 6, un système d'éclairage 7, un pédalier 8 d'axe Xp [Fig. 2], un système de localisation et/ou navigation 90 ainsi qu'un système interface homme-machine 91 comportant notamment un écran tactile apte à afficher des informations pour et/ou prendre en compte les demandes dudit utilisateur. Le système interface homme-machine 91 est en particulier relié au système de localisation 90 et sert d'interface de navigation. L'invention n'est pas limitée à un système interface homme-machine particulier, et peut comporter tout système connu de l'homme du métier.

Les roues 3, 3' sont munies d'un système de freinage 31, comportant notamment des freins à disque 32.

L'engin 1 comporte un ensemble de transmission 10 illustré [Fig. 2]. L'ensemble de transmission 10 comporte un dispositif de changement de vitesse 20 automatique selon l'invention et le moteur électrique 2 pour fournir une partie de la puissance pour la propulsion de l'engin 1.

Selon une première variante de l'invention, l'engin comporte 3 vitesses.

Selon un mode de réalisation de l'invention, l'ensemble de transmission 10 est au moins en partie logé dans un boîtier 30 ici positionné au niveau du pédalier 8 dont l'axe Xp est confondu avec l'axe de sortie Xᵥ du dispositif de changement de vitesse 20.

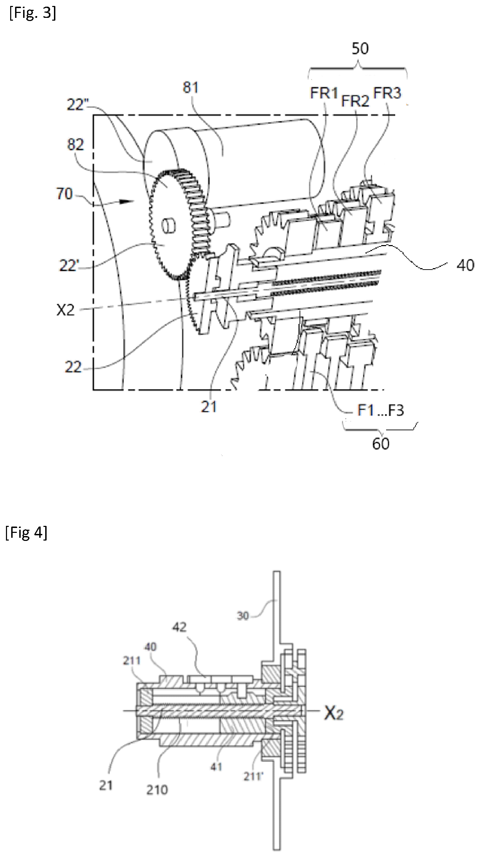

Dans le cadre de l'invention, le dispositif de changement de vitesse 20 illustré [Fig. 3] et [Fig. 4] comporte trois rapports.

Selon un mode de réalisation de l'invention, le dispositif de changement de vitesse 20 illustré [Fig. 3] et [Fig. 4] comporte 3 rapports distribués entre un premier rapport dit rapport n°1 et un rapport supérieur dit rapport n°3.

Selon un mode de réalisation de cette première variante, le dispositif de changement de vitesse 20 comporte une série 60 de trois pignons de sortie, de référence F₁ à F₃, solidaires en rotation d'un arbre creux et une série 50 de trois pignons d'entrée d'axe X2, de référence FR₁ à FR₃, agencés pour tourner librement autour de l'arbre de sélection 40.

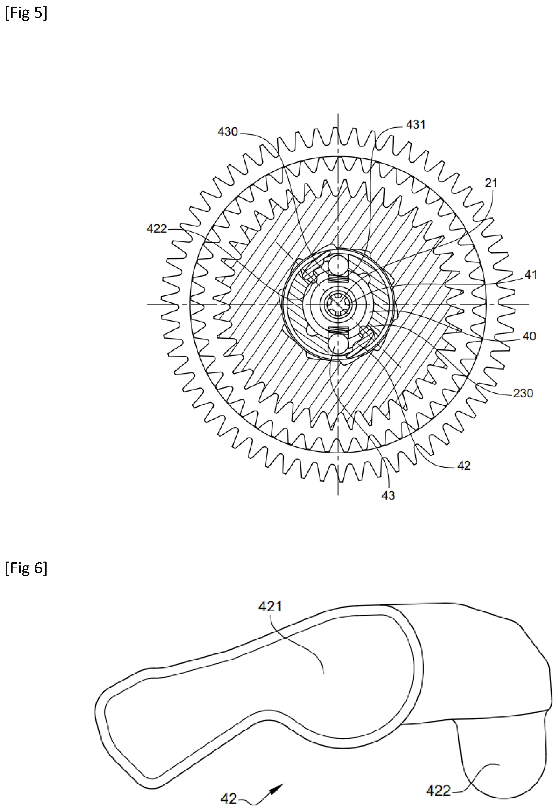

Selon un mode de réalisation de l'invention, l'arbre de sélection 40 illustré [Fig. 3] à [Fig. 5] loge une navette 41 entourant une vis sans fin 21 du dispositif de changement de vitesse 20. L'engin 1 selon l'invention, comporte un actionneur de changement de vitesse 70 agencé pour déplacer la navette 41 le long de la vis sans fin 21 par une liaison cinématique hélicoïdale, entre 3 positions de P₁ à P₃ et engager un rapport sélectionné.

Selon un mode de réalisation de l'invention, l'actionneur de changement de vitesse 70 comporte des moyens électriques de déplacement de la navette 41, sous forme d'un motoréducteur. Celui-ci comporte un moteur 81 et un réducteur 82.

Selon un mode de réalisation de l'invention, le motoréducteur comporte également un pignon 22 sur l'axe de la vis sans fin 21, un pignon 22' intermédiaire et un pignon 22‴ sur l'axe Xm du moteur 81. Les dentures des pignon 22, 22', 22" peuvent être droites comme illustré ou hélicoïdales dans une variante non illustrée.

Le guidage en rotation de la vis sans fin 21 est par exemple assuré à l'aide de roulements à chacune de ses extrémités.

Selon un mode de réalisation de l'invention, la navette 41 est configurée pour, lors de son déplacement, se positionner sous le pignon du rapport sélectionné, et enclencher ce rapport. Selon un mode de réalisation de l'invention [Fig. 4], le dispositif de changement de vitesse 20 comporte une série de trois cliquets 42 disposés les uns à la suite des autres selon l'axe longitudinal X2 de l'arbre de sélection 40.

Selon un mode de réalisation de l'invention, le dispositif de changement de vitesse 20 comporte au moins une série de trois cliquets 42 disposés les uns à la suite des autres selon l'axe longitudinal X2 de l'arbre de sélection 40.

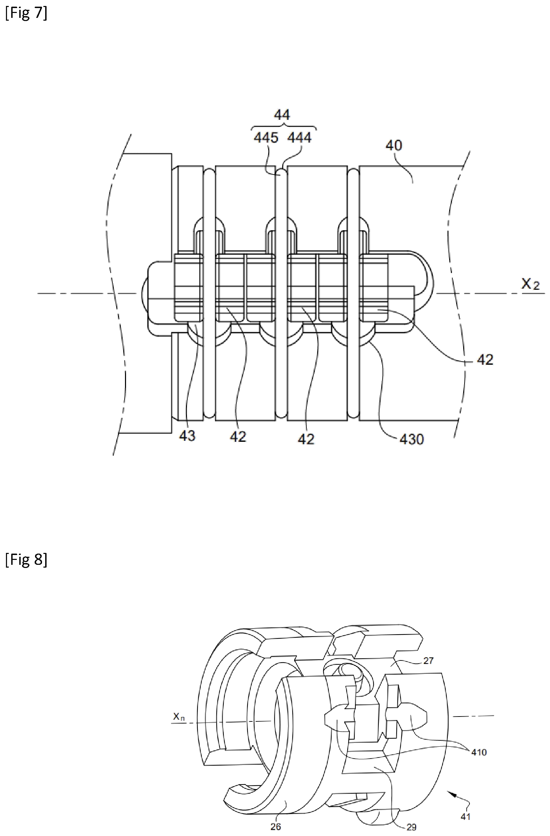

Selon un mode de réalisation de l'invention [Fig. 5] et [Fig. 7], le dispositif de changement de vitesse 20 comporte deux séries de trois cliquets 42 disposés les uns à la suite des autres selon l'axe longitudinal X2 de l'arbre de sélection 40.

Selon un mode de réalisation de l'invention [Fig. 5], les séries sont disposées à 180 degrés l'une de l'autre autour de l'arbre de sélection 40. Cela limite le nombre de pièces par rapport à l'art antérieur.

Les cliquets 42 ont une forme configurée pour coopérer avec les pignons d'entrée Fri. Les cliquets 42 sont disposés dans des évidements 230 formés sur l'arbre de sélection 40.

Dans le cadre de l'invention [Fig. 6], le cliquet a un corps 421 de forme allongée et comporte a une extrémité une protubérance 422 qui est insérée dans l'évidement 230 de l'arbre de sélection 40.

Cette protubérance 422 permet d'améliorer le passage des rapports du dispositif, et en particulier lors de la rétrogradation.

Selon un mode de réalisation de l'invention, la protubérance 422 forme un angle droit avec le corps du cliquet 42 et est orientée vers l'arbre de sélection 40 de façon à s'insérer dans le l'évidement 230.

Le corps 421 du cliquet est disposé tangentiellement par rapport à l'arbre de sélection 40 de façon à ce que la protubérance 422 soit insérée dans l'évidement 230.

Chaque cliquet 42 est associé à un dispositif de soulèvement, et par exemple une bille 43, associée par exemple à un ressort 431 de soulèvement, visible [Fig. 5] disposée dans un perçage 430 de l'arbre intérieur, dépassant à l'intérieur de l'arbre intérieur, placée sous chaque cliquet 42 de façon à pouvoir le soulever via la navette 41.

Ainsi, lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41, la navette 41 est positionnée sous le pignon d'entrée Frᵢ correspondant au rapport i sélectionné, qui est alors bloqué en rotation par un des cliquets 42, et engrène avec le pignon correspondant de sortie.

Dans le cadre de l'invention, pour maintenir chaque cliquet 42 en place dans son évidement, le système de changement de vitesse comporte au moins un système de blocage radial 44 formé par au moins une rainure 445 formé dans l'arbre de sélection 40 et une bague élastique 444 [Fig. 6]. Ce système 44 maintient le cliquet 42 plaqué dans son évidement, tout en lui permettant de se soulever via la bille 43 et la navette 41.

Selon un mode de réalisation de l'invention, la rainure 445 entoure l'arbre de sélection 40. Selon un mode de réalisation de l'invention, la bague élastique 444 entoure radialement l'arbre de sélection 40.

Selon un mode de réalisation de l'invention, la rainure 445 formée dans l'arbre de sélection coïncide avec une rainure secondaire 446 formé sur le cliquet 42. La bague élastique 444 est ainsi maintenue en place dans la rainure 445 de l'arbre et dans la rainure 446 du cliquet et maintien à son tour le cliquet 42 en place. La bague élastique 444 entourant totalement l'arbre de sélection 40, elle permet de maintenir en même temps les deux cliquets disposés à 180° degrés l'un de l'autre autour de l'arbre de sélection 40.

Selon un mode de réalisation de l 'invention, le système de changement de vitesse comporte au moins trois systèmes de blocage 44 en rotation disposés de façon à bloquer les deux séries d'au moins trois cliquets 42.

Selon un mode de réalisation de l 'invention, le système de changement de vitesse comporte trois systèmes de blocage 44 en rotation disposés de façon à bloquer les deux séries de trois cliquets 42.

Chaque système de blocage 44 en rotation exerce ainsi sur chaque cliquet 42 une pression, ou force de plaquage, suffisante pour bloquer le cliquet 42 dans l'évidement 230 tout en lui permettant d'être soulevé par la navette 41.

Selon un mode de réalisation de l'invention, la navette comprend un corps 26 de forme cylindrique comportant des canaux longitudinaux 27 s'étendant sur toute sa longueur et, comportant au centre, par rapport à son axe longitudinal un canal transversal 29.

Dans le cadre de l'invention, illustrée [Fig. 8], la navette 41 comprend deux encoches 410 de part et d'autre du canal transversale 29 permettant de maintenir le cliquet 42 en place selon l'axe longitudinal Xn de la navette 41, via sa protubérance 422. Les encoches sont donc positionnées au niveau de l'appui de la protubérance 422.

Ainsi lors du fonctionnement de l'engin de mobilité, La navette 41 permet de sélectionner le rapport choisi qui va enclencher un pignon d'entrée Fri via un cliquet 42 et être bloqué en rotation grâce au système de blocage en rotation 44.

Le pignon d'entrée Fri engrène ensuite avec un pignon de sortie Fi.

Si l'engin 1 roule dans un rapport i, sans en changer, la vis sans fin 21 ne tourne pas.

Lors d'un changement de rapport de vitesse la vis sans fin 21 est entrainée en rotation par l'actionneur de changement de vitesse 70 provoquant le mouvement axial de l'écrou 210 de la vis 21 qui entraine la navette 41 et permet ainsi le passage de rapport. Grâce à la liaison pivot ainsi réalisée le mouvement de rotation de la vis sans fin 21 est transformé en mouvement de translation de la navette 41.

Selon un mode de réalisation de l'invention, une butée 211, 211' limite à chaque extrémité le déplacement de la navette 41. Selon un autre mode de réalisation de l'invention, le déplacement de la navette est contrôlé par un capteur de position.

Selon un mode de réalisation non illustré, la navette 41 est apte à prendre une position dite position neutre P0 pour laquelle aucun rapport de vitesse n'est engagé.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Dispositif de changement de vitesse (20) pour engin de mobilité (1) comportant :
- un arbre de sélection (40) dans lequel sont disposées une navette (41) et une vis sans fin (21),
- trois pignons d'entrée (50, Fri) agencés pour tourner librement autour de l'arbre de sélection ( 40 ) et trois pignons de sortie (60, Fi),
- un actionneur de changement de vitesse (70) agencé pour déplacer la navette (41) le long de la vis sans fin (21) entre trois positions, et engager un rapport sélectionné via au moins une série de trois cliquets disposés les uns à la suite des autres selon l'axe longitudinal (X2) de l'arbre de sélection (40), chaque cliquet (42) étant associé à un dispositif de soulèvement (43) permettant de soulever le cliquet via la navette (41), et à enclencher le rapport sélectionner via les pignons d'entrée et de sortie,
**caractérisé en ce que** le cliquet a un corps (421) de forme allongée et comporte a une extrémité une protubérance (422) qui s'insère dans un évidement (230) de l'arbre de sélection (40).

2. Dispositif de changement de vitesse (20) selon la revendication 1, dans lequel la protubérance (422) forme un angle droit avec le corps (421) du cliquet (42) et est orientée vers l'arbre de sélection (40) de façon à s'insérer dans l'évidement (230).

3. Dispositif de changement de vitesse (20) selon la revendication 1 ou 2, dans lequel le corps (421) du cliquet est disposé tangentiellement par rapport à l'arbre de sélection (40) de façon à ce que la protubérance (422) soit insérée dans l'évidement (230).

4. Dispositif de changement de vitesse (20) selon une des revendications 1 à 3, comportant deux séries de trois cliquets (42) disposés les uns à la suite des autres selon un axe longitudinal (X2) de l'arbre de sélection (40) disposées à 180 degrés l'une de l'autre autour de l'arbre de sélection (40).

5. Dispositif de changement de vitesse (20) selon une des revendications 1 à 4, comportant au moins un système de blocage radial (44) formé par au moins une rainure (445) formé dans l'arbre de sélection (40) et une bague élastique (444) disposée dans la rainure et de façon à maintenir le cliquet (42) plaqué dans son évidement, tout en lui permettant de se soulever via la navette (41).

6. Dispositif de changement de vitesse (20) selon la revendication 5, dans lequel la bague élastique (444) entoure radialement l'arbre de sélection (40).

7. Dispositif de changement de vitesse (20) selon une des revendications 1 à 4, dans lequel la navette (41) comporte deux encoches (410) permettant de maintenir le cliquet (42) en place, selon un axe longitudinal (Xn) de la navette (41), via sa protubérance (422).

8. Dispositif de changement de vitesse (20) selon la revendication 7, dans lequel les deux encoches (410) sont disposées de part et d'autre d'un canal transversale (29) de la navette (41).

9. Engin de mobilité (1), notamment engin de mobilité à assistance électrique, comportant un dispositif de changement de vitesse (20) selon l'une quelconque des revendications précédentes.

10. Engin de mobilité selon la revendication 9, dans lequel l'engin (1) est un vélo à assistance électrique.
